# EUROPÄISCHE PATENTSCHRIFT

(11) **EP 2 848 885 B1**
(45) Veröffentlichungstag und Bekanntmachung des Hinweises auf die Patenterteilung: **04.05.2016**
(21) Anmeldenummer: 13184127.2
(22) Anmeldetag: 12.09.2013
(51) Int. Cl.: F28D 1/03, F28D 20/02

(54) **Wärmespeicher**
Heat accumulator
Accumulateur thermique

(43) Veröffentlichungstag der Anmeldung: 18.03.2015
(73) Patentinhaber: Otto Graf GmbH Kunststofferzeugnisse, 79331 Teningen (DE)
(72) Erfinder: Graf, Otto P., 79331 Teningen (DE)
(74) Vertreter: Grünecker Patent- und Rechtsanwälte PartG mbB

(56) Entgegenhaltungen:
- WO-A1-2012/097861
- WO-A2-2011/035943
- GB-A- 1 079 533
- US-A1- 2006 021 745

## Beschreibung

Die Erfindung betrifft einen Wärmespeicher der im Oberbegriff des Patentanspruchs 1 angegebenen Art. Ein derartiger Wärmespeicher ist zum Beispiel aus DE 10 2007 048416 A1 bekannt.

Erdwärmespeicher werden in Verbindung mit einer Wärmepumpe in geothermischen Anlagen beispielsweise zur Beheizung von Gebäuden verwendet, wobei das Wärmetauschelement beispielsweise abhängig vom Leistungsbedarf gestaltet und im Behältnis installiert ist. Die Gestaltung und Installation sind zeitaufwendig und arbeitsintensiv.

In zunehmendem Maß werden Eiswärmespeicher beispielsweise zur Beheizung und/oder Kühlung von Gebäuden in Verbindung zumindest mit einer Wärmepumpe eingesetzt. Als Behältnis dient eine Betonzisterne, die entweder in Ortbeton oder aus Betonformteilen erstellt wird. Als Wärmetauschelement werden wendelförmig verlaufende Kunststoffrohrbündel installiert, positioniert und fixiert, die von einem gefrierfesten Wärmeträgermedium durchströmt werden. Das Behältnis ist mit Wasser gefüllt. Das Funktionsprinzip besteht darin, dass dem Wasser im Behältnis Wärme entzogen und zur Beheizung über eine Wärmepumpe abgeführt wird. Dabei wird das Phänomen genutzt, dass eine hohe Energiemenge freigesetzt oder aufgenommen wird, sobald sich der Aggregatszustand des Wassers von flüssig nach fest verändert, oder umgekehrt. Die Wassermoleküle speichern nämlich enorm viel Kristallisationswärme, bis der Gefrierzustand erreicht ist. So speichert ungefrorenes Wasser mit 0°C bis zum gefrorenen Zustand die gleiche Energie, wie sie eingesetzt werden muss, um 80°C heißes Wasser auf 0°C abzukühlen. Wärme wird dem Wasser in der Zisterne über das Wärmeträgermedium in den Wärmetauscherelementen entzogen, bis der Eiswärmespeicher von innen nach außen fast vollständig einfriert. Bei der Auslegung des Gesamtsystems wird allerdings darauf geachtet, dass zwischen dem entstehenden Eisklotz in der Mitte und der Behältniswand noch ein Bereich mit ungefrorenem Wasser verbleibt, da der Eiswärmespeicher sonst einer unzulässig hohen Krafteinwirkung ausgesetzt wäre.

Die Erstellung der Betonzisterne ist zeit- und arbeitsaufwendig und teuer, wie auch die Gestaltung und Installation des Wärmetauschelements bzw. der Kunststoffrohre, die im Betonwerk oder vor Ort mühsam installiert werden müssen. Das Internet enthält Fundstellen, die eine Installationsweise der Kunststoffrohre zeigen. Die hohen Gestehungskosten und der große Arbeitsaufwand für Fachpersonal beschränken bisher die Akzeptanz bei Nutzern, wobei zu berücksichtigen ist, dass weiter entfernte Länder im Süden wie im Norden Europas relativ ideale Voraussetzungen für die Nutzung des Funktionsprinzips, zum Beispiel des Eiswärmespeichers böten, dort aber die Akzeptanz aus den oben erwähnten Gründen noch geringer ist als im industrialisierten Zentraleuropa. Insbesondere ist die Logistik mit den großen Betonzisternen eine Herausforderung, und verhindert eine überregionale und internationale Verbreitung dieser neuen Technologie.

Aus DE 10 2007 048 416 A1 ist ein Eisspeicher bekannt, dessen Behältnis untereinander verschiedene Platten aus rostfreiem Stahl enthält. Die Platten sind industriell hergestellt und im Wesentlichen vertikal und mit Zwischenabständen verbaut. Die Rohrbündel sind in den Platten enthalten. Das Behältnis ist quaderförmig und weist einen oberseitigen Kältemittelablauf und einen unterseitigen Kältemittelzulauf auf. Um eine gleichmäßige Eisbildung zu gewährleisten, sind an den verschiedenen Platten Wärmeaustauschstrecken mit jeweils gleicher Länge vorgesehen.

Bei einem aus DE 10 2010 053 076 A1 bekannten Latentwärmespeicher sind industriell hergestellte, Rohrbündel enthaltende, untereinander gleiche Platten aus Aluminiumblech oder Metall in einem quaderförmigen Kunststoffbehälter eingebaut. Die Platten sind flächenverklebt und beschichtet, um eine gute Wärmeleitung sicherzustellen.

In einem aus DE 19740818 A1 erläuterten Kältespeicher sind plattenförmige Wärmetauscher verbaut, die jeweils aus mindestens drei randseitig dicht miteinander verschweißten Blechen bestehen. Im Behältnis für mehrere geschlossene Kreisläufe sind mehrere Wärmetauscherkammern vorgesehen, jeweils mit eigenem Zulauf und Ablauf.

Von Interesse sind ferner: WO 2012/097861 A1; GB 1,079,533 A; US 2,006/021745 A1 und WO 2011/035943 A2.

Der Erfindung liegt die Aufgabe zugrunde, einen Wärmespeicher der eingangs genannten Art zu schaffen, der kostengünstig und mit erheblich geringerem Arbeitsaufwand sogar ohne Fachpersonal rasch erstellbar ist.

Die gestellte Aufgabe wird erfindungsgemäß mit den Merkmalen des Patentanspruchs 1 gelöst.

Die industriell vorgefertigten Platten ermöglichen eine sehr schnelle Montage im Behältnis, wobei die Montage problemlos vor Ort und von Personal mit nur durchschnittlichen Fachkenntnissen durchführbar ist. Ein Eiswärmespeicher lässt sich beispielsweise in wenigen Stunden montieren, weil die Platten einfach einsetzbar sind und die jeweilige Rohrschlange auf exakt vorherbestimmte Weise positionieren. Die Platten werden so montiert, dass sie im Wesentlichen vertikal stehen und zueinander parallel mit Zwischenabständen angeordnet sind, um ihre Rohrschlangen so positionieren, dass beispielsweise bei einem Eiswärmespeicher das Wasser vom Zentrum des Behältnisses und von unten her allmählich nach außen zu gefrieren beginnt, wodurch aus der Volumenzunahme beim Gefrierprozess lediglich der Wasserstand im Behältnis bis zu einem Überlauf ansteigt. Bei richtiger Auslegung wirken auf das Behältnis keine Berstkräfte ein. Die Platte als Träger der Rohrschlange positioniert diese auf optimale und fertigungsseitig vorbestimmte Weise, ist gestaltfest und dennoch leicht, und bequem einzusetzen. Im Extremfall könnte sogar eine einzige Platte reichen. Dabei ist jede Platte ein kostengünstig, formtreu, widerstandsfähig und dennoch relativ leichtgewichtig herstellbarer Kunststoff-Formteil und vorzugsweise sogar einstückig. Als Herstellverfahren für die Platten bieten sich Blas-, Tiefzieh-, Rotations-, Spritzgieß- sowie speziell Twinsheet-Tiefziehverfahren an. Aufgrund des relativ geringen Gewichts der Kunststoff-Tankhalbschalen und der Platten und deren gute Stapelbarkeit lassen sie sich, falls gewünscht, mit geringen Transportkosten über weite Distanzen zum Installationsort bringen und vor Ort montieren. Dies lässt eine erhebliche Steigerung der Akzeptanz in südlichen oder nördlichen Ländern Europas oder sogar weltweit erwarten. Alternativ kann jede Platte ein Dünnblech- oder Verbundmaterial-Formteil sein, das z. B. aus Zuschnitten nach Schweiß-, Löt- oder Klebetechniken industriell vorfertigbar ist. Auch diese Platten bieten den Vorteil geringen Gewichts, niedriger Transportkosten, und einer schnellen einfachen Montage. Grundsätzlich sind alle Materialien brauchbar, die sich zu solchen Rohrschlangen enthaltenden Platten verarbeiten lassen. Der Wärmespeicher ist schnell und einfach erstell- und montierbar, da das Behältnis ein industriell vorgefertigter, aus Schalen oder Tanksegmenten gefügter Kunststoff-Tank ist. Die Kombination aus dem Kunststoff-Tank und den Platten kann vor Ort erstellt, oder auch schon bei einem Hersteller funktionsfertig montiert an den Einsatzort transportiert werden. Die Kunststoff-Tank-Teile können aus unterschiedlichen Kunststoffsorten nach Rotations-, Tiefzieh-, Spritzgieß- oder ähnlichen Kunststoffformverfahren hergestellt sein, wobei die relativ leichten Schalen oder Segmente zum Transport platzsparend ineinander stapelbar sind und mit den oder wie die vorgefertigten Platten kompakte Transportgebinde ermöglichen. Der Kunststoff-Tank besteht zweckmäßig aus zwei Halbschalen und hat, vorzugsweise, annähernd zylindrische Gestalt mit in Einbaulage horizontal liegender Zylinderachse und wenigstens einem Tankdom im Zylindermantel. Besonders eignen sich hierfür Regenwasser-Erdtanks, die bisher zur Regenwassernutzung schon weltweit vertrieben werden. Ein Regenwasser-Erdtank kann ohne jegliche Modifikationen als das Behältnis des Wärmespeichers eingesetzt werden. Dies reduziert die Gestehungskosten weiterhin und bietet den Vorteil, dass solche Erdwassertanks, beispielsweise mit dem Handelsnamen "Carat Regenwassertank" bereits jetzt in etwa 60 Länder der Erde exportiert werden und dort relativ gut verfügbar sind. Der Tankdom im Zylindermantel ermöglicht auch in eingebautem Zustand des Wärmespeichers Zugang zum Inneren und die Installation und Positionierung von Anschlussleitungen, Sonden, Sensoren, und dergleichen. Jede Platte hat zweckmäßig einen annähernd kreisförmigen Umriss, wobei für die Kombination mit dem zylindrischen Kunststoff-Tank die Außenformgebung der Platte in etwa der Innenformgebung des Kunststoff-Tanks entspricht.

Bei einer zweckmäßigen Ausführungsform beispielsweise eines Eiswärmespeichers kann unterhalb der Platten eine Regenerations-Rohrschlange horizontal liegend angeordnet sein, die mit einem Wärmeträgermedium durchströmbar ist und für Regenerationszyklen des Eiswärmespeichers, vorzugsweise mit Solarthermie, betrieben wird. Für diese Rohrschlange gelten die gleichen Vorteile wie für die Platten.

Bei einer zweckmäßigen Ausführungsform sind im Hinblick auf moderate Gestehungskosten die Platten untereinander gleich. Aufgrund entsprechend hoher Stückzahlen dieses Gleichteil-Prinzips reduziert dies nicht nur die Herstellungskosten, sondern können Wärmespeicher unterschiedlicher Leistungsstufen modular mit Platten in der jeweiligen optimalen Anzahl bestückt werden. Da alle Platten auf dieselbe Weise fixiert sein können, ist eine sehr schnelle Montage der Platten möglich.

Bei einer anderen zweckmäßigen Ausführungsform insbesondere eines Eiswärmespeichers ist zwischen wenigstens zwei Platten ein vertikal angeordnetes U-Rohr oder U-Rohrbündel, vorzugsweise aus Kunststoff oder Metall oder einer Kombination der beiden Materialien, angeordnet. Vorzugsweise sind mehrere U-Rohre oder -bündel unterhalb des Bereiches des Tankdoms im Eiswärmespeicher vorgesehen. Diese U-Rohre oder -bündel können, falls erforderlich, ebenfalls für Regenerationszwecke benutzt werden.

Wird als Behältnis ein industriell vorgefertigter Kunststoff-Tank verwendet, dann ist dieser zweckmäßig im Wesentlichen vertikal innen und außen und im Wesentlichen allseitig regelmäßig verrippt, wobei, vorzugsweise durch die Rippen innenseitige Stecktaschen zum Positionieren von Platten gebildet sein können. Die Verrippung erhöht nicht nur die Gestaltfestigkeit des Kunststoff-Tanks, sondern vergrößert auch seine zum Wärmetransfer in das oder aus dem Erdreich nutzbare Oberfläche.

Bei einer zweckmäßigen Ausführungsform folgt die Rohrschlange in oder an der Platte einem mäanderförmigen Verlauf mit zueinander parallelen entweder annähernd geraden oder kreisbogenförmigen, unterschiedlich langen Zwischenabschnitten, wobei, vorzugsweise, plattenrandseitig ein Zulauf und ein Ablauf der Rohrschlange vorgesehen ist, von denen, vorzugsweise zumindest einer annähernd zum oder beim Plattenzentrum vorbei geführt ist. Diese Ausführungsform ist kostengünstig herstellbar und ermöglicht einen vorbestimmt gezielten Wärmeeintrag oder Wärmeentzug sowie günstige Strömungsverhältnisse. Ferner gleitet Eis in der Schmelzphase leicht von der Oberfläche der Platte ab.

Bei einer zweckmäßigen Ausführungsform mit einem Kunststoff-Tank als Behältnis sind die Schalen des Kunststoff-Tanks mit Randflanschen mit einer Dichtung geklammert, verschraubt, verschweißt oder verklebt. Eine Klammerung oder Verschraubung ermöglicht die bequeme Montage vor Ort und, falls erforderlich, eine zerstörungsfreie Demontage. Eine Schweißung oder Klebung kann gegebenenfalls ebenfalls vor Ort vorgenommen werden, wird bevorzugt aber beim Hersteller erzeugt, der den Wärmespeicher vorfertigt und zum Einsatzort transportiert. Die Platten können im Herstellerwerk bei der geklammerten Tankversion vormontiert und als Gesamtsystem an den Einsatzort geliefert werden. Im Ausland sind nationale Montagezentren denkbar, die diese Vormontage ausführen und die Wärmespeicher dann komplett ausliefern.

Zweckmäßig ist die Rohrschlange in oder an zumindest einer Platte oder einer Gruppe von oder allen montierten Platten über eine Steuereinrichtung wahlweise im Regenerationsbetrieb beaufschlagbar, vorzugsweise sogar solarthermisch. Diese über die Steuereinrichtung gesteuerte Regeneration kann additiv oder alternativ zur Regeneration über die horizontale Rohrschlange und/oder die vertikalen U-Rohre erfolgen. Alternativ können die U-Rohre und die horizontale Rohrschlange auch weggelassen werden, und wird nur noch über eine oder mehrere Platten ganz oder teilweise regeneriert. Die Regeneration könnte in einer oder mehreren Platten stattfinden, während die restlichen für den Wärmeentzug benutzt werden. Wärmeentzug oder Regeneration werden zeitlich- oder temperatur-gesteuert.

Ein wesentlicher Aspekt der Erfindung besteht in der industriellen Fertigung zumindest der plattenförmigen Rohrschlangen-Träger, gegebenenfalls auch der Tank-Halbschalen, womöglich als Gleichteile in großen Stückzahlen, um Kosten zu sparen. Diese Teile sind leicht und deshalb kompakt zu transportieren, und erlauben schließlich eine außerordentlich schnelle und einfache Montage der Wärmespeicher.

Der Erfindungsgegenstand wird anhand der Zeichnungen erläutert. Es zeigen:
- Fig. 1: Eine perspektivische Schnittdarstellung einer Hälfte einer Ausführungsform eines Wärmespeichers,
- Fig. 2: eine gegenüber Fig. 1 um 90 Grad gedrehte Perspektivschnittdarstellung einer Hälfte der Ausführungsform des Wärmespeichers von Fig. 1,
- Fig. 3: eine Explosions-Perspektivdarstellung eines Montageschritts dieser Ausführungsform,
- Fig. 4:: eine weitere Perspektiv-Explosionsdarstellung eines Montageschritts dieser Ausführungsform,
- Fig. 5: eine Ansicht auf eine Platte, die in dem Wärmespeicher der verschiedenen Ausführungsformen als Wärmetauschelement eingesetzt werden kann,
- Fig. 6: eine Ansicht einer Platte in einer anderen Ausführungsform,
- Fig. 7: eine Ansicht einer Platte in einer noch weiteren Ausführungsform,
- Fig. 8-12: Schnittdarstellungen unterschiedlicher Ausführungsformen von Platten zur Verdeutlichung von Rohrquerschnitten,
- Fig. 13: eine Perspektiv-Explosionsdarstellung einer weiteren Ausführungsform eines Wärmespeichers, und
- Fig. 14 und Fig. 15: jeweils ein Transportgebinde.

Für das nachstehend beschriebene Wärmespeicherkonzept sind unterschiedliche Betriebsweisen denkbar. Als Erdwärmespeicher wird zum Beispiel Wasser in das Behältnis gebracht, und über die Außenwand nimmt das Wasser die im Erdreich vorhandene Wärme auf. Üblicherweise haben wir in Deutschland ganzjährig rd. 8°C Erdtemperatur. Über das Wärmetauschelement im Behältnis wird dem Wasser Wärme entzogen und über eine Wärmepumpe beispielsweise zur Beheizung genutzt. Das sich im Behältnis abkühlende Wasser wird durch die höhere Umgebungstemperatur im Erdreich regeneriert sowie ggf. durch zusätzliche Regeneration vorzugweise mittels Solarthermie. Wenn weiterhin dem Wasser Wärme entzogen wird, ändert sich sein Aggregatzustand von flüssig zu fest und wird Kristallisationswärme an den Wärmetauscher abgegeben. Das Eis haftet entweder am Wärmetauscher oder löst sich von diesem ab und schwimmt nach oben. Bei richtiger Konzeption friert das Eis von Innen nach Außen im Speicher und auf das Behältnis wirken keine Berstkräfte. Im Sommer kann die Anlage ohne Einsatz der Wärmepumpe einfach weiter laufen, wodurch das Haus gekühlt werden kann und die Temperatur im Eiswärmespeicher ansteigt. Am Ende des Sommers sollte so das Eis komplett geschmolzen sein. Die Heizperiode kann von neuem beginnen.

Bei einer Verwendung als Eiswärmespeicher wird dem im Behältnis gespeicherten Wasser zum Heizen Wärme entzogen, insbesondere der hohe Energieanteil der Kristallisationswärme, und über eine Wärmepumpe beispielsweise für Heizzwecke eingesetzt. Dabei gibt die Kristallisationsenergie in dieser Betriebsphase sehr viel Wärme an das System ab, in der das Wasser zu gefrieren beginnt, bis schließlich ein Eisblock vorliegt. Parallel zur Wärmeentnahme wird ständig versucht alle Wärmequellen zu nutzen und eine Regenerationsphase zu fahren, in der von außen eingeführte Wärme das Eis schmilzt und im Wasser gespeichert wird. Um mit dem Wärmeträgermedium zu kühlen, kann bei gefrorenem oder kaltem Wasser im Behältnis über das Wärmeträgermedium Wärme eingetragen werden.

Eine Kombination aus Erdwärmespeicher und Eiswärmespeicher ist ebenfalls denkbar.

Der Erfindungsgegenstand wird nachstehend anhand eines Eiswärmespeichers und seiner Hauptsbestandteile erläutert, obwohl zumindest das Behältnis und ein Wärmetauschelement bildende Platten mit Rohrschlangen auch in einem Erdwärmespeicher verwendbar sind.

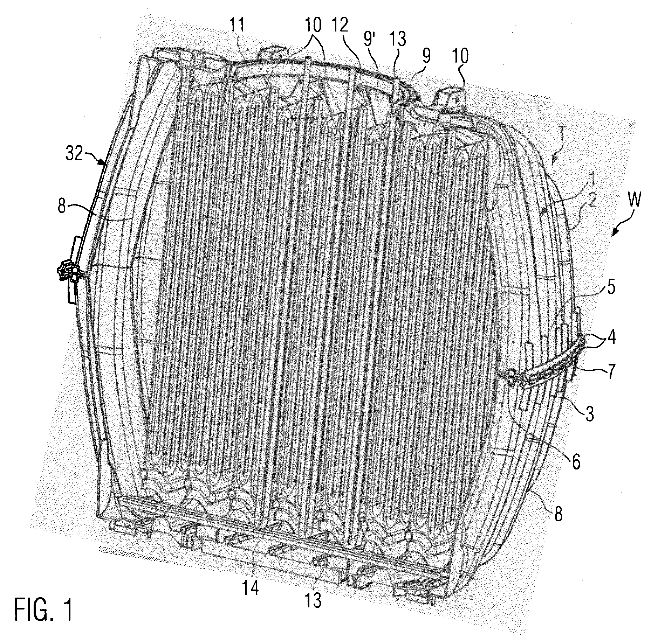

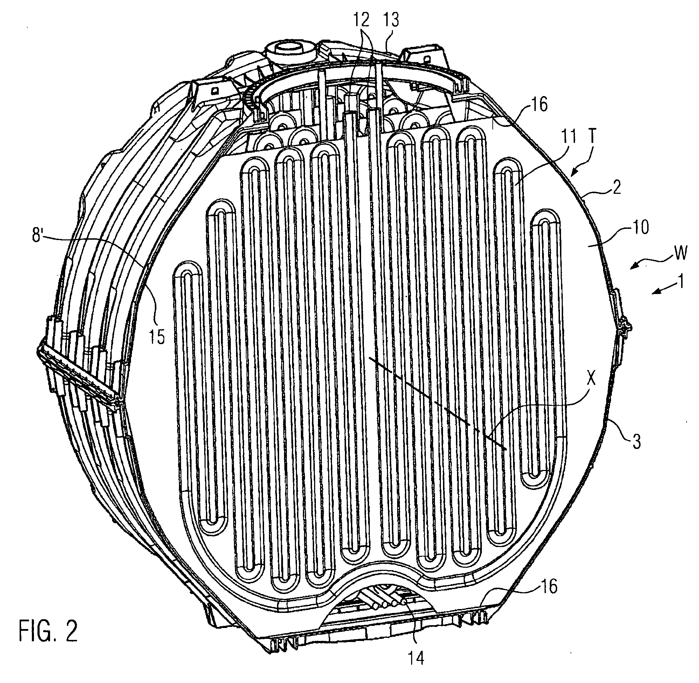

Gemäß Fig. 1 bis 4 weist ein als Eiswärmespeicher verwendbarer Wärmespeicher W ein Behältnis 1 auf, in welchem als Wärmetauschelement mindestens eine Platte 10, im gezeigten Ausführungsbeispiel mehrere, zum Beispiel sieben, hier untereinander gleiche Platten 10 montiert sind, deren jede wenigstens eine von einem Wärmeträgermedium durchströmbare Rohrschlange 11 aufweist. In dieser Ausführungsform ist das Behältnis 1 ein Kunststoff-Tank T aus industrieller Fertigung und gefügt aus Schalen oder Tank-Segmenten, im Ausführungsbeispiel aus zwei Schalen 2,3, die mit Randflanschen 4 und Klammerelementen oder Verschraubungen 5 und einer Dichtung 6 gefügt sind. Alternativ könnten die Randflansche 4 auch verschweißt oder verklebt sein. Der Kunststoff-Tank T hat allgemein zylindrische Form mit in Einbaulage (Fig. 2) liegender Zylinderachse X, wenigstens einen im Zylindermantel geformten Tankdom 9 und nach außen bombierten Tankböden 32. Da der Wärmespeicher W zum Erdeinbau bestimmt ist, kann die im Tankdom 9 begrenzte Öffnung durch einen Schachtaufsatz bis zu einer Wartungsebene verlängert werden, wobei in dem Schachtaufsatz weitere, nicht im Detail erläuterte Betriebskomponenten untergebracht werden können, beispielsweise ein Überlauf oder ein Anschluss zu einem Überlauf oder Rohrverteiler oder Armaturen oder Anschlussstücke. Der Kunststoff-Tank T ist innen und außen im Wesentlichen vertikal und regelmäßig verrippt (Rippen 8), wobei idealerweise zwischen den Rippen 8 im Inneren des Kunststoff-Tanks Stecktaschen 8 zum Positionieren jeweils mindestens einer Platte 10 vorgesehen sind. Zum Positionieren bzw. Montieren der Platten 10 könnten jedoch auch andere Halteeinrichtungen verwendet werden. Die Platten 10 könnten bei einer anderen Tankform auch voneinander verschieden sein und/oder mehr als eine Rohrschlange 11 aufweisen.

Die Schalen 2,3 oder Segmente des Kunststoff-Tanks können nach üblichen Herstellungsverfahren industriell vorgefertigt sein, beispielsweise nach Blas-, Tiefzieh-, Rotations-, oder Twinsheet-Tiefziehverfahren.

Der Bodenbereich der unteren Schale 3 kann (Fig. 2) abgeflacht sein. Die untereinander möglichst gleichen (identischen) Platten 10 haben einen dem Innenquerschnitt des Kunststoff-Tanks T angepassten, in etwa runden Umriss 15 hier mit oberen und unteren Abflachungen 16 am Rand. Die Platten 10 sind im Wesentlichen vertikal und zueinander parallel und mit Zwischenabständen eingebaut. Zwischen den Platten 10 können als Option, zumindest im Bereich des Tankdoms 9, vertikal installierte U-Rohre 13 installiert sein, zum Beispiel zur Regeneration, und kann unterhalb der Platten 10 eine horizontal installierte Rohrschlange 14, ebenfalls zu Regenerationszwecken, vorgesehen sein, die beispielsweise ein industriell vorgefertigtes Kunststoff-Formteil ist. Die Rohrschlange 14 und die vertikalen U-Rohre 13, die ebenfalls Kunststoffrohre sein können, können gegebenenfalls miteinander verbunden sein.

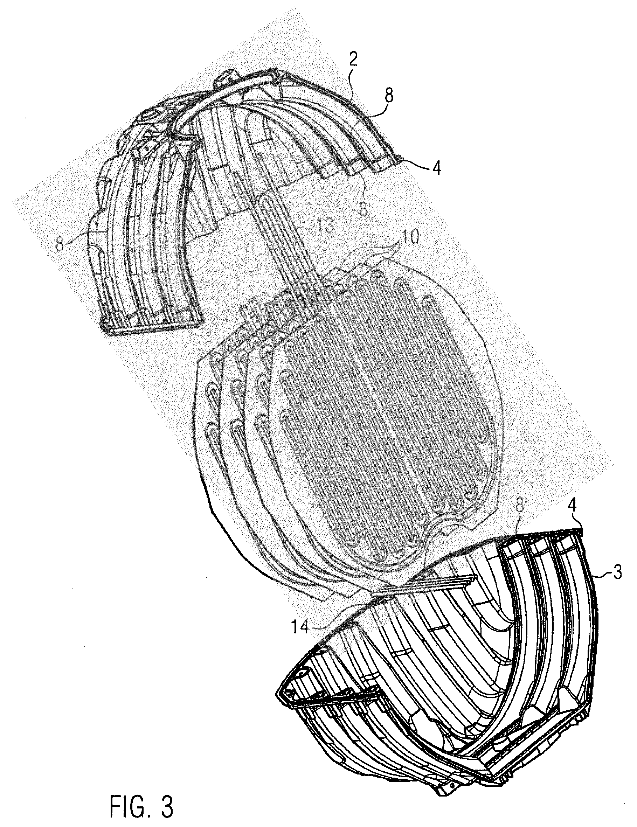

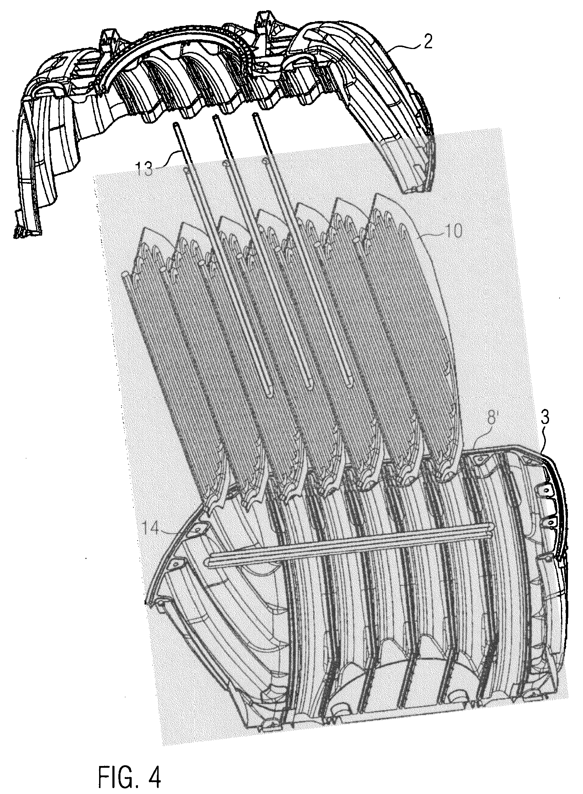

Fig. 1 zeigt den Wärmespeicher W in perspektivischem Halbschnitt, wobei die Platten 10 in etwa in der Zylinderachse geschnitten sind; Fig. 2 zeigt den Wärmespeicher W in einem perspektivischen Halbschnitt um 90 Grad gegenüber Fig. 1 gedreht; Fig. 3 verdeutlicht in Explosions-Perspektivdarstellung ein Montagekonzept mit Schnittführung ähnlich wie in Fig. 2; Fig. 4 verdeutlicht in Explosionsperspektivdarstellung ebenfalls ein Montagekonzept in einer Schnittdarstellung ähnlich der von Fig. 1.

Der anhand der Fig. 1 bis 4 erläuterte Kunststoff-Tank T kann für die Erstellung des Wärmespeichers W produziert sein, oder ist zweckmäßig sogar ein industriell hergestellter, und praktisch weltweit zum Beispiel zur Regenwassernutzung verfügbarer Erdwassertank aus Kunststoff, der ohne Modifikationen als das Behältnis 1 des Wärmespeichers W verwendbar ist. Gut eignet sich hierfür der Erdwassertank mit der Handelsbezeichnung "Carat Regenwassertank" des Anmelders, obwohl andere Kunststoff-Tanks oder Wasser-Erdtank genauso brauchbar sind, die in unterschiedlichen Größen gebräuchlich sind.

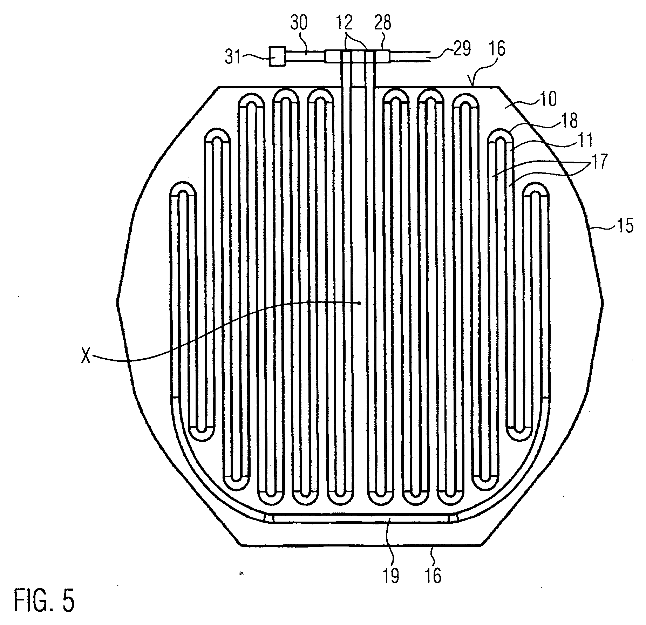

Fig. 5 ist eine Frontalansicht einer der Platten 10, die als Beispiel in den Fig. 1 bis 4 verbaut sind, und verdeutlicht den Verlauf der Rohrschlange 11 in der Platte 10 in deren Einbauposition. Die Rohrschlange 11 folgt einem mäanderförmigen Verlauf mit parallelen und in der Platten-ebene beabstandeten geraden Zwischenabschnitten 17, die über Rohrbögen 18 miteinander verbunden sind, wobei in dieser Ausführungsform ein unterer Rohrbogen 19 von einer Seite der Rohrschlange 11 unten zu deren anderen Seite führt. Ein Zulauf und ein Ablauf 12 stehen plattenrandseitig, zum Beispiel in der Abflachung 16, vor, die an ein (nicht gezeigtes) Rohrsystem für ein gefriergeschütztes Wärmeträgermedium anschließbar sind. Zu- und Ablauf 12 führen beispielsweise zum oder am die Zylinderachse X enthaltenden Zentrum der Platte 10 vorbei. Die vertikale Anordnung der Zwischenabschnitte 17 begünstigt hier dem schmelzenden Eis das Abgleiten von der Platte 10.

Als Detail ist in Fig. 5 angedeutet, dass Zu- und Ablauf zu einer Steuereinrichtung 20 führen können, die es ermöglicht, wahlweise die Rohrschlange 11 mit dem Wärmeträgermedium (über die Leitungen 29) in einer oder wahlweise jeder Strömungsrichtung zu speisen, oder mit dem gleichen Wärmeträgermedium oder einem anderen über Leitungen 30 zu Regenerationszwecken zu speisen, wobei, vorzugsweise davon eingebrachte Wärme von einer solarthermischen Quelle 31 bereitgestellt werden kann.

Die Platte 10 könnte zur Gewichtseinsparung, Oberflächenvergrößerung, für optimale Verteilung des Wassers im Behältnis oder für eine andere Montageweise Durchbrüche aufweisen (nicht gezeigt).

In Fig. 5 ist die Platte 10 einstückig. Alternativ könnte (nicht gezeigt) die Rohrschlange 11 an der Platte 10 nur fixiert und von ihr getragen sein, z. B. durch Anclipsen. So könnte die Platte 10 an nur einer oder ab beiden Seiten wenigstens eine Rohrschlange 11 tragen und als Montageeinheit eine Träger- und Positionier-Funktion für die Rohrschlange erfüllen.

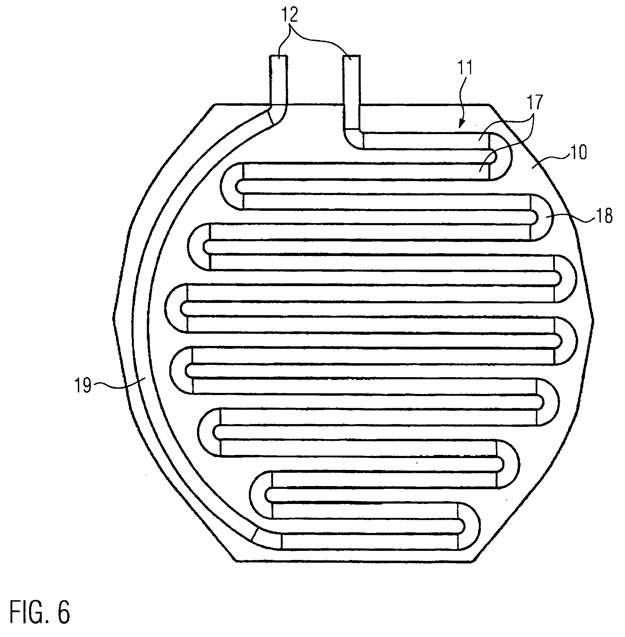

Fig. 6 verdeutlicht in einer Frontalansicht eine weitere Ausführungsform der Platte 10, in der die Rohrschlange 11 mäanderförmig mit ihren Zwischenabschnitten 17 so gebildet ist, dass die Zwischenabschnitte 17 horizontal verlaufen, und der Verbindungsabschnitt 19 entlang des Plattenrandes zum Zu- bzw. Ablauf 12 führt.

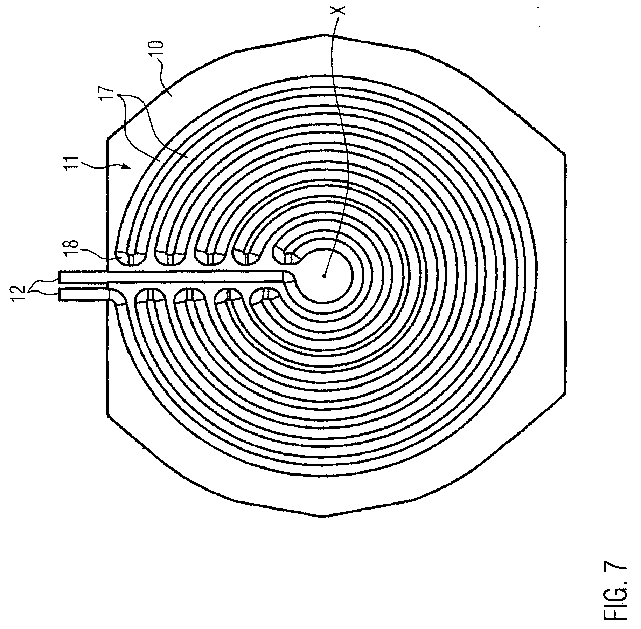

Fig. 7 verdeutlicht in einer Frontalansicht eine weitere Ausführungsform der Platte 10, deren mäanderförmige Rohrschlange 11 mit Zu- und Ablauf 12 Kreisbogenabschnitten folgende Zwischenabschnitte 17 enthält, wobei die verbindenden Rohrbögen 18 in einer mittleren Vertikalebene liegen können. Dieser Verlauf der Rohrschlange 11 ermöglicht es beispielsweise, im Wasser im Behältnis 1 vom Zentrum im Bereich der Zylinderachse X und von unten her zu Eis zu bilden, das von der Mitte und von unten her nach außen und oben wächst, und umgekehrt von außen her nach innen und unten schmilzt.

Die Platten 10 sind industriell vorgefertigte Formteile, können einstückig und aus Kunststoff hergestellt sein, beispielsweise nach Blas-, Tiefzieh-, Rotations-, Spritzgieß- oder dem zweckmäßigen Twinsheet-Tiefziehverfahren. Alternativ ist eine Bauweise der Platten 10 aus dünnem Blech aus Blechmaterial mit guten Wärmeleiteigenschaften zweckmäßig, wobei diese Blechformteile zweckmäßig verschweißt, verlötet oder verklebt oder durch sonstige geeignete Fügeverfahren mit der Rohrschlange 11 produziert werden. Andere Materialien, beispielsweise Verbundmaterialien, sind ebenfalls zur Herstellung der Platten 10 nutzbar.

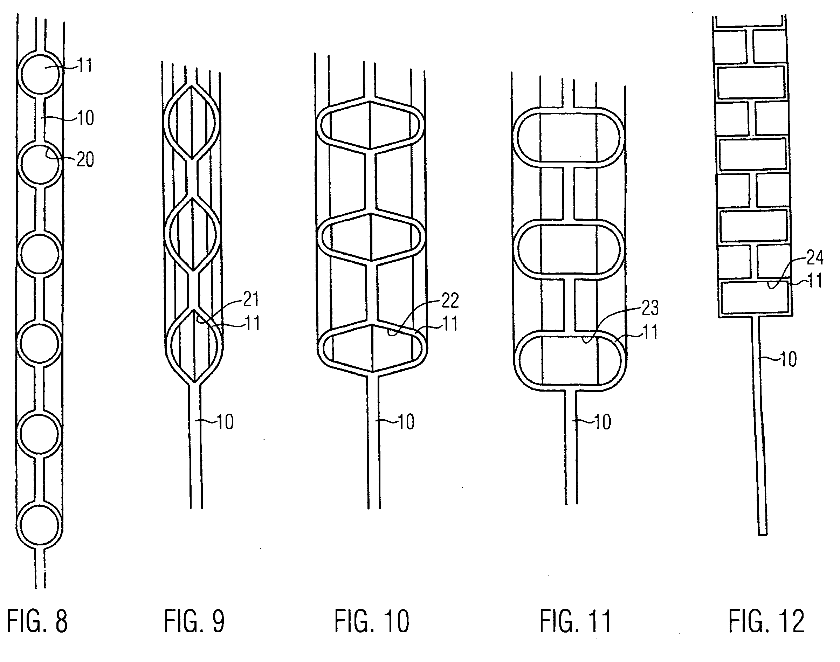

Die Fig. 8 bis 12 verdeutlichen unterschiedliche Rohrquerschnitte der Rohrschlange 11 in oder an der Platte 10. In Fig. 8 hat die Rohrschlange 11 einen zumindest weitestgehend kreisförmigen Querschnitt. In Fig. 9 ist der Querschnitt 21 der Rohrschlange 11 in etwa stehend linsenförmig. In Fig. 10 ist der Querschnitt 22 der Rohrschlange 11 in etwa liegend oval mit horizontal liegender längerer Hauptachse. In Fig. 11 ist der Querschnitt 23 der Rohrschlange 11 in etwa elliptisch mit horizontal liegender Ellipsenhauptachse. In Fig. 12 ist der Querschnitt 24 der Rohrschlange 11 rechteckig mit horizontal liegender längerer Rechteckachse.

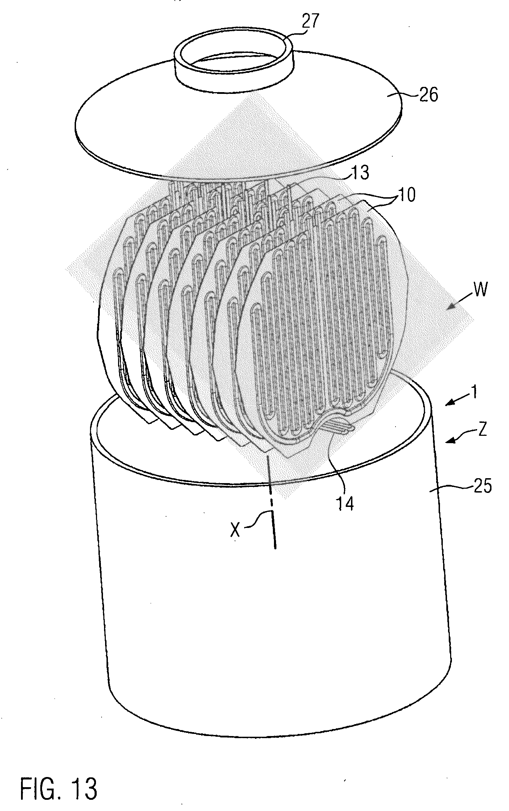

Fig. 13 verdeutlicht eine weitere Ausführungsform des Wärmespeichers W, dessen Behältnis 1 als Standard-Betonzisterne Z ausgebildet ist, die einen in etwa zylindrischen Unterteil 25 mit vertikal stehender Zylinderachse X und einen Deckel 26 mit einem Mann-Loch 27 umfasst. Die Platten 10, gegebenenfalls die U-Rohre 13 und die untenliegende horizontale Rohrschlange 14, werden vor dem Aufsetzen des Deckels 26 eingesetzt, und entweder an Positionierhilfen im Unterteil 25 festgelegt oder vorab über Verbindungselemente zu einem Plattenpaket zusammengefasst. Der Unterteil 25 kann in Ort-Beton erstellt werden, oder aus Betonformteilen.

Die Montage des Wärmespeichers W zumindest der Fig. 1 bis 4 ist in wenigen Minuten von Personal mit durchschnittlichen Fachkenntnissen zu bewerkstelligen, während Wärmespeicher nach dem Stand der Technik eine Montagezeit von mehreren Stunden benötigten. Bei der Ausführungsform der Fig. 13 benötigt man zur Erstellung der Betonzisterne Z mehr Zeit; die Platten 10 lassen sich jedoch auch hier rasch montieren.

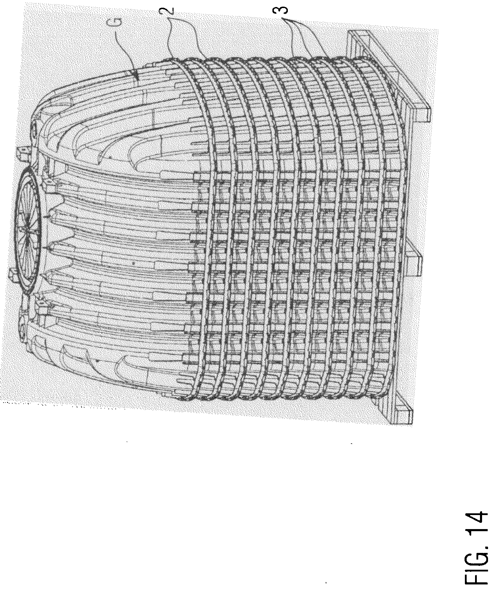

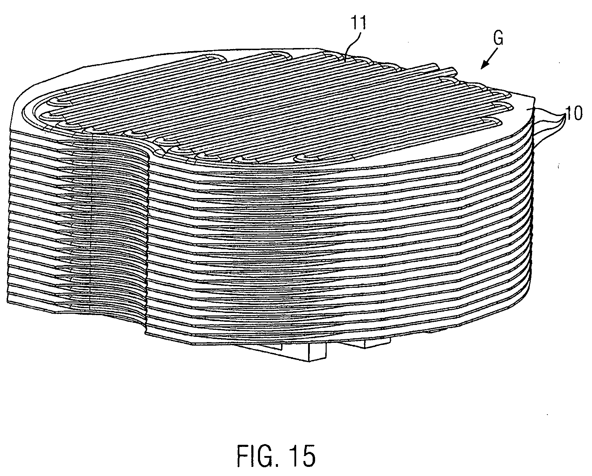

Wenn der Wärmespeicher W, beispielsweise der Fig. 1 bis 4, vor Ort erstellt wird, können die Schalen 2, 3 des Kunststoff-Tanks T sowie die Einzelteile wie die Platten 10 und dergleichen zu einem kompakten Transportgebinde G (Fig. 14, 15) gestapelt und kostengünstig transportiert werden. Alternativ kann der Kunststoff-Tank T vor Ort verfügbar sein, und werden die zum Einbau bestimmten Einzelteile wie die Platten in einem kompakten Transportgebinde G (Fig. 15) hin transportiert. Es wäre am vorteilhaftesten, den Wärmespeicher W, beispielsweise der Fig. 1 bis 4, beim Hersteller oder in einem Montagezentrum im Ausland für den lokalen Markt fertig zu montieren und betriebsbereit zum Einsatzort zu transportieren. Die Einzelteile, wie die Platten 10, können, speziell bei Ausbildung aus Kunststoff, gegebenenfalls so leicht sein, dass sie von einer oder zwei Personen ohne Zuhilfenahme von Hebezeug zu handhaben sind. Ebenso lassen sich die stapelbaren Halbschalen 2, 3 des Kunststoff-Tanks T in wenigen Minuten ohne Werkzeug zusammenmontieren.

## Patentansprüche

1. Wärmespeicher (W), insbesondere Eiswärmespeicher oder Erdwärmespeicher, mit einem mit Wasser befüllbaren Behältnis (1), in welchem als Wärmetauschelement eine von einem Wärmeträgermedium durchströmbare Rohrschlangenanordnung installiert ist, wobei das Wärmetauschelement industriell mit mindestens einer eingeformten oder eingebrachten Rohrschlange (11) vorgefertigte Platten (10) umfasst, die im wesentlichen vertikal, parallel und mit Zwischenabständen im Behältnis (1) installiert sind,
**dadurch gekennzeichnet,**
**dass** jede Platte (10) ein nach einem Blas-, Tiefzieh-, Rotations- oder Spritzgieß bzw. Twinsheet-Tiefziehverfahren hergestellter Kunststoff-Formteil oder ein Dünn-Blech oder Verbundmaterial-Formteil ist, dass das Behältnis (1) ein industriell vorgefertigter, aus Schalen (2, 3) oder Tanksegmenten gefügter Kunststoff-Wasser-Tank (T) ist, der annähernd zylindrische Gestalt, in Einbaulage eine im wesentlichen horizontal liegende Zylinderachse (X) und im Zylindermantel wenigstens einen Tankdom (9) aufweist, und dass jede Platte (19) annähernd kreisförmigen Umriss (15) mit einer in etwa der Innenform des Kunststoff-WasserTanks (T) entsprechenden Außenform hat.

2. Wärmespeicher nach Anspruch 1, **dadurch gekennzeichnet, dass** die Platten (10) untereinander gleich sind.

3. Wärmespeicher nach Anspruch 1, **dadurch gekennzeichnet, dass** der Kunststoff-Wasser-Tank (T) ein aus zwei Schalen (2, 3) gefertigter Regenwasser-Erdtank ist, und dass die Schalen 2, 3 nach Montage der Platten (10) mit Randflanschen (14) dicht geklammert, verschraubt, verschweißt oder verklebt sind.

4. Wärmespeicher nach wenigstens einem der vorhergehenden Ansprüche, **dadurch gekennzeichnet, dass** unterhalb der Platten (10) im Behältnis (1) eine industriell vorgefertigte Regenerations-Rohrschlange (14) horizontal liegend installierbar ist.

5. Wärmespeicher nach wenigstens einem der vorhergehenden Ansprüche, **dadurch gekennzeichnet, dass** zwischen wenigstens zwei Platten (10) wenigstens ein vertikal angeordnetes U-Rohr oder U-Rohrbündel (13), vorzugsweise aus Kunststoff, Metall oder einem Verbundmaterial angeordnet ist, vorzugsweise unterhalb des Bereiches des Tankdoms (9).

6. Wärmespeicher nach Anspruch 1, **dadurch gekennzeichnet, dass** der Kunststoff-Tank (T) innen und außen im Wesentlichen allseitig vertikal und im Wesentlichen regelmäßig verrippt (10) ist.

7. Wärmespeicher nach Anspruch 1, **dadurch gekennzeichnet, dass** die Rohrschlange (11) in oder an der Platte (10) einem mäanderförmigen Verlauf mit zueinander parallelen, entweder annähernd geraden oder kreisbogenförmigen, unterschiedlich langen Zwischenabschnitten (17) folgt, und vorzugsweise, plattenrandseitig einen Zulauf und einen Ablauf (12) hat, von denen, vorzugsweise, zumindest einer annähernd zum oder durch das Plattenzentrum (Z) geführt ist.

8. Wärmespeicher nach wenigstens einem der vorhergehenden Ansprüche, **dadurch gekennzeichnet, dass** die Rohrschlange (11) in oder an zumindest einer Platte (10) oder in einer Gruppe von oder in allen Platten (10) und/oder die Regenerations-Rohrschlange (14) und/oder die U-Rohre (13) über eine Steuereinrichtung (28) wahlweise im Regenerationsbetrieb beaufschlagbar ist, vorzugsweise solarthermisch.

## Claims

1. Heat accumulator (W), in particular ice heat accumulator or geothermal energy accumulator, comprising a receptacle (1) to be filled with water, within which a pipe coil assembly to be flown through by a heat transfer medium is installed as a heat exchanging element, wherein the heat exchanging element comprises plates (10) industrially premanufactured with at least one integrated or inserted pipe coil (11) which plates (10) are installed in the receptacle (1) substantially vertically, parallely and with intermediate distances,
**characterized in that**,
each plate (10) is a plastic material formed part made according to a blow method, deep drawing method, rotation molding method or injection molding method or twin sheet-deep drawing method or a thin metal sheet formed part or composite material formed part, that the receptacle (1) is a plastic material water tank (T) industrially premanufactured and combined from shells (2, 3) or tank segments, which plastic material water tank (T) has substantially cylindrical form, including a cylinder axis (X) lying in installation position substantially horizontal, and at least one tank dome (9), and that each plate (10) has a substantially circular contour (15) with that an outer shape corresponding substantially with the inner shape of the plastic material water tank (T).

2. Heat accumulator according to claim 1, **characterized in that** the plates (10) are equal among each other.

3. Heat accumulator according to claim 1, **characterized in that** the plastic material water tank (T) is a rain water subterranean tank manufactured from two shells (2.3), and that after mounting the plates (10) the shells (2, 3) are tightly clamped together at edge flanges (14), or are screwed together, welded to each other, or glued.

4. Heat accumulator according to at least one of the preceding claims, **characterized in that** an industrially premanufactured regeneration tube coil (14) is to be installed in horizontal lying condition in the receptacle (1) underneath the plates (10).

5. Heat accumulator according to at least one of the preceding claims, **characterized in that** between at least two plates (10) at least one vertically arranged U-tube or U-tube bundle (13), preferably made from plastic material, metal or a composite material is arranged, preferably underneath the region of the tank dome (9).

6. Heat accumulator according to claim 1, **characterized in that** the plastic material water tank (T) is ribbed vertically substantially regularly inside and outside and substantially at all sides.

7. Heat accumulator according to claim 1, **characterized in that** the tube coil (11) follows a meander like course having parallel either substantially straight or arcuate intermediate sections (17) of differing longitudinal extensions, and, preferably, comprises at the side of the plate edge an inlet port and outlet port (12), of which, preferably, at least one extends to or through the center (Z) of the plate.

8. Heat accumulator according to at least one of the preceding claims, **characterized in that** the tube coil (11) in or at least at one plate (10) or within a group of or in all plates (10) and/or the regeneration tube coil (14) and/or the U-tubes (13) selectively are to be actuated in a regeneration operation mode by a control device (28), preferably in solar thermal fashion.

## Revendications

1. Accumulateur de chaleur (W), notamment accumulateur de chaleur à glace ou accumulateur de chaleur géothermique, comprenant un conteneur (1) susceptible d'être rempli d'eau et dans lequel est installé en guise d'élément d'échange de chaleur, un agencement de serpentins tubulaires pouvant être traversé par l'écoulement d'un fluide caloporteur, l'élément d'échange de chaleur comprenant des plaques (10) préfabriquées industriellement, dans lesquelles est formé ou réalisé au moins un serpentin tubulaire (11), et qui sont installées sensiblement de manière verticale parallèle et en étant espacées mutuellement dans le conteneur (1),
**caractérisé**
**en ce que** chaque plaque (10) est une pièce de forme moulée en matière plastique ou une tôle mince ou une pièce de forme moulée en matériau composite, fabriquée selon un procédé de soufflage, d'emboutissage ou de thermoformage, de moulage par rotation ou par injection ou respectivement un procédé de thermoformage Twin-sheet (double coque), en ce que le conteneur (1) est un réservoir d'eau (T) en matière plastique préfabriqué industriellement, constitué de l'assemblage de coques (2, 3) ou de segments de réservoirs, et qui présente une configuration approximativement cylindrique, un axe de cylindre (X) sensiblement orienté à l'horizontale dans la position implantée, et au moins un dôme de réservoir (9) dans l'enveloppe de cylindre, et en ce que chaque plaque (19) présente un tracé de contour périphérique (15) approximativement circulaire avec une forme extérieur correspondant environ à la forme intérieure du réservoir d'eau (T) en matière plastique.

2. Accumulateur de chaleur selon la revendication 1, **caractérisé en ce que** les plaques (10) sont identiques entre elles.

3. Accumulateur de chaleur selon la revendication 1, **caractérisé en ce que** le réservoir d'eau (T) en matière plastique est un réservoir d'eau de pluie à enfouir dans le sol, fabriqué en deux coques (2, 3), et **en ce que** les coques (2, 3), après le montage des plaques (10), sont assemblées de manière étanche, par l'intermédiaire de brides de bordure (4), par agrafage, vissage, soudage ou collage.

4. Accumulateur de chaleur selon l'une au moins des revendications précédentes, **caractérisé en ce que** sous les plaques (10) dans le conteneur (1) est installé, en position horizontale, un serpentin tubulaire (14) préfabriqué industriellement.

5. Accumulateur de chaleur selon l'une au moins des revendications précédentes, **caractérisé en ce qu'**entre au moins deux plaques (10) est disposé, de préférence en-dessous de la zone du dôme de réservoir (9), au moins un tube en U ou un faisceau de tubes en U (13) agencé verticalement, de préférence en matière plastique, en métal ou en un matériau composite.

6. Accumulateur de chaleur selon la revendication 1, **caractérisé en ce que** le réservoir (T) en matière plastique est nervuré (10) à l'intérieur et à l'extérieur, sensiblement sur tous les côtés, de manière verticale et sensiblement de manière régulière.

7. Accumulateur de chaleur selon la revendication 1, **caractérisé en ce que** le serpentin tubulaire (11) suit, dans ou sur la plaque (10), un tracé en forme de méandres avec des tronçons intermédiaires (17) parallèles les uns aux autres, soit approximativement rectilignes ou en forme d'arc de cercle et de longueur différente, et possède de préférence du côté du bord de la plaque, une alimentation et une évacuation (12), dont de préférence au moins une est menée approximativement vers ou à travers le centre (Z) de la plaque.

8. Accumulateur de chaleur selon l'une au moins des revendications précédentes, **caractérisé en ce que** le serpentin tubulaire (11) dans ou sur au moins une plaque (10) ou dans un groupe de plaques ou dans toutes les plaques (10), et/ou le serpentin tubulaire de régénération (14), et/ou les tubes en U (13), peuvent, par l'intermédiaire d'un dispositif de commande (28), être amenés sélectivement dans un mode de fonctionnement en régénération, de préférence par voie thermique solaire.
